# EUROPEAN PATENT APPLICATION

(11) **EP 1 843 298 A2**
(43) Date of publication of application: **10.10.2007**
(21) Application number: 07251511.7
(22) Date of filing: 05.04.2007
(51) Int. Cl.: G06T 11/60

(54) **Image blending system and method**

(30) Priority: 06.04.2006 GB 0606977
(71) Applicant: Fremantlemedia Limited, 1 Stephen Street London W1T 1AL (GB)
(72) Inventor: Hedenström, Erik, 116 41 Stockholm (SE); Caulfield, Declan, Tyresö (SE)
(74) Representative: Exell, Jonathan Mark

(57) **Abstract**

A method and system for image blending is disclosed. A destination image is received (100), the destination image including an image portion to be replaced and having characteristics associated with the identified image portion. A source image is also received (130). An image portion of the source image to be inserted into the destination image is identified (140). Where necessary, parameters of the image portion to be inserted are transformed to match those of the image portion to be replaced (150). The image portion to be inserted is then blended into the destination image in dependence on the image portion to be replaced and its associated characteristics (160). A video generation system using these features is also disclosed.

## Description

### Field of the Invention

The present invention relates to an image blending system and method which is applicable to blending a source image into a destination image and is particularly applicable to blending facial images from a source image into a destination image. The present invention also relates to a video generation system.

### Background to the Invention

There have been many attempts over the years to provide methods and systems in which a user appears in a different scene to that in which he or she is actually present. These range from the decorated boards at amusement parks where users insert their faces through a cut-out right through to the complex world of television and film where actors are filmed in front of a blue screen background and are later superimposed in a real or computer generated scene.

In more recent times, the accessibility of computers and digital photography has meant that users are able to manipulate digital photographs to replace one person or face with another or introduce a new person into a scene. This technique can be extended to video by repeating the process for each frame in an existing video sequence.

In each of these methods and systems, unless great care is taken (and a significant degree of post-processing is performed), the introduced person or face is immediately recognizable as such as it is visually out of context.

An additional problem with these methods and systems is that they are generally performed by hand as they are close to an art form (selecting the appropriate image portion, blending edges ...). As such, they do not lend themselves to automation successfully.

This ultimately means they are slow and results achieved are dependent on the skill of the operator due to the manual nature of the process.

### Statement of Invention

According to an aspect of the present invention, there is provided an image blending system arranged to receive a source image and a destination image, the destination image including an image portion to be replaced and having characteristics associated with the identified image portion, wherein the image blending system includes a processor arranged to:
identify an image portion of the source image to be inserted into the destination image;
where necessary, transform parameters of the image portion to be inserted to match those of the image portion to be replaced; and,
blend the image portion to be inserted into the destination image in dependence on the image portion to be replaced and its associated characteristics.

According to another aspect of the present invention, there is provided an image blending method comprising:
(a) receiving a destination image, the destination image including an image portion to be replaced and having characteristics associated with the identified image portion;
(b) receiving a source image;
(c) identifying an image portion of the source image to be inserted into the destination image;
(d) where necessary, transforming parameters of the image portion to be inserted to match those of the image portion to be replaced; and,
(e) blending the image portion to be inserted into the destination image in dependence on the image portion to be replaced and its associated characteristics.

Step (a) may further comprise:
(a1) identifying an image portion of the destination image to be replaced; and,
(a2) extracting the characteristics associated from the image portion to be replaced from the destination image or an associated data source.

The method may further comprise:
performing steps (a1) and (a2) in advance;
recording data on the results of steps (a1) and (a2); and,
performing step (e) in dependence on the recorded data.

The image portion to be replaced and the image portion to be inserted may each include a face.

The parameters of the image portion to be replaced include may at least selected ones of:
orientation of the subject of the image portion, colour space and size of the image portion.

Step (e) may comprise the steps of:
(e1) computing an average colour matrix for each of the image portion to be inserted and for the image portion to be replaced;
(e2) computing a colour-offset matrix from the computed average colour matrices; and,
(e3) applying the colour-offset matrix to the image portion to, be inserted to thereby transfer chromatic parameters from the image portion to be replaced.

The method may further comprise:
prior to step (e2), blurring the average colour matrix of the image portion to be replaced.

The method may further comprise:
after step (e3), performing edge masking on the image portion to be inserted using an alpha mask.

The destination image may comprise one of a plurality of images forming an image stream, the method further comprising:
repeating steps (d) and (e) in respect of each of the plurality of images.

Embodiments of the present invention relate systems and methods in which characteristics are extracted from a source image and merged with pre-existing characteristics in a destination image.

Preferably, the source image may include a face to be inserted in place of a pre-existing face in the destination image. Chromatic parameters may be extracted from the facial characteristics of the face to be replaced in the destination image and applied to those of the face to be inserted from the source image. In this manner, a face can be blended into a destination image. Lighting effects extracted from the destination image are applied to the face such that it appears the face truly belongs in the image.

The present invention seeks to provide a system and method which enable an automatic and accurate transfer of the source image to the destination image including application of chromatic parameters to thereby form a new composite image.

In a preferred embodiment, a method and/or system according to an aspect the present invention may be used in a video generation system. A source image is accepted and appropriate characteristics are extracted and subsequently merged with a series of frames from a video. In the case of a face, the video could be a music video in which the face of a person provided is inserted to make it appear that the person is appearing in the audience or performing in the music video. Similarly, embodiments could equally be implemented for television game shows (where the face of the person is inserted as a contestant) or indeed any other video, television or film source. Embodiments may allow customized television programmes to be created for a user or group (and possibly broadcast via a carrier medium such as IPTV). Other embodiments may enable concepts of chat rooms or video-conferencing to be extended such that the user appears in a graphical environment and the image of the user (derived from a still image) is visually consistent with that environment, its lighting and the like.

In a preferred embodiment, speech data from the user or from a person in the video may be captured and used to animate the facial expressions of a face from the source image being blended into the video.
A system for creation of video dialogues featuring the facial characteristics of supplied images (source image). The system utilizes characteristics taken from supplied audio and images to rapidly create new video sequences featuring the input characteristics blended with existing visual elements and characteristics. The result is a new video sequence, featuring the input characteristics re-animated and merged with similar pre-existing characteristics in a pre-existing video sequence.

Preferred embodiments of the present invention enable the rapid blending of facial characteristics taken from a still image to form a new composite facial image.

The system uses a full chromatic analysis pixel by pixel to accurately transfer the chromatic values from the destination image to re-light facial features from a source image. This transfer provides a realistic blend of chromatic values from the destination image to be applied to the source face image to render it as if it was originally lit by the lighting source/s in the destination image.

The system may also use feature tracking algorithms to track facial features in a source image and place these composite source facial characteristics in a destination image.

The system may also use acoustic modeling to deform the jaw line and mouth area of the source face image to recreate facial morphology.

Embodiments can accept input from various devices which can capture audio and video sources in audio, image and video files.

For the purposes of the present invention, an image is considered to be digital in the form of a collection of pixels. The total number of pixels is equal to the product of the width and height of the image counted in pixels. The collection of pixels is represented by a two dimensional array using a coordinate space
where the origin is located in the top left corner, and the x coordinate increase to the right, while the y coordinate increase downwards. A pixel is a point in a image that represents a specific RGB color. Each pixel is represented by 32 bits; 8 bits are used to represent transparency (also known as the alpha channel), 8 bits represent the color red, 8 bits represent the color blue, and the last 8 bit represent the color green. This color scheme is known as Truecolor with an alpha channel or RGBA format. For our purposes each pixel can be seen as a vector of <R,G,B,A> where each element has a value in the range of 0 to 255 inclusive.

### Brief Description of the Drawings

Embodiments of the present invention will now be described in detail, by way of example only, with reference to the accompanying drawings in which:
Figure 1 is a schematic diagram illustrating aspects of an image blending system according to an embodiment of the present invention;
Figure 2 is a flow diagram of an image branding method according to another embodiment of the present invention;
Figure 3 is a flow diagram of a preferred implementation of the method of Figure 2 illustrating selected aspects in more detail;
Figure 4 is a schematic diagram of a video generation system according to an embodiment of the present invention;
Figure 5 is a schematic diagram of a data format suitable for use in embodiments of the present invention;
Figure 6 is a flow diagram of an image blending method according to another embodiment of the present invention;
Figures 7a to 7g are images illustrating the operation of an embodiment of the present invention.

### Detailed Description

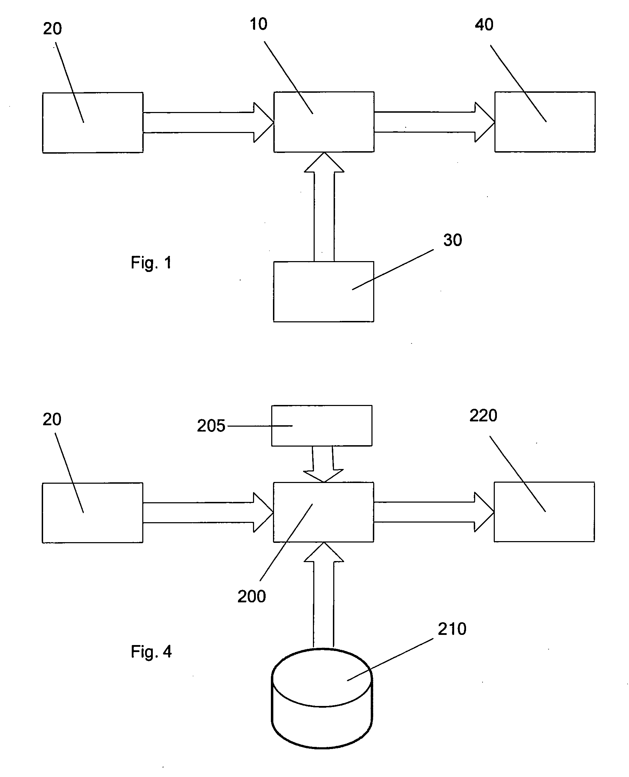

Figure 1 is the schematic diagram illustrating aspects of image blending system according to an embodiment of the present invention.

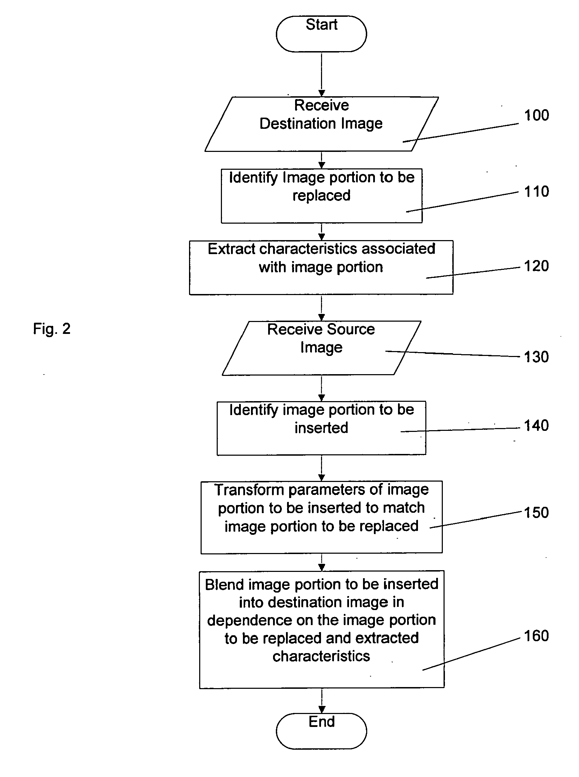

The image blending system 10 is arranged to receive a source image 20 and a destination image 30, process them and produce a blended image 40. The processing performed by the image blending system is discussed in more detail with reference to Figure 2.

In step 100, the destination image is received. In step 11.0 an image portion of the destination image to be replaced is identified. Characteristics associated with the identified image portion are extracted in step 120.

In step 130, the source image is received. In step 140 an image portion to be inserted is identified from the source image. Parameters of the image portion to be inserted are transformed in step 150 to match those of the image portion to be replaced. Finally in step 160 the image portion to be inserted is blended into the destination image independence on the image portion to be replaced and the extracted characteristics obtained in step 120.

It will be appreciated that the details of these specific steps performed will be dependent on the respective image portions. In one embodiment, the image portion may be a person's face. In this embodiment, the image portion to be replaced could be identified by matching face feature coordinates such as the centre of the left eye, right eye and mouth. A similar process would be performed in step 140 on the source image to identify the face to be inserted.

Before the blended face can be computed the source and destination faces must be extracted from the respective images. The method for extracting the face is the same for both the source and destination faces. The method computes how many degrees the face is rotated. This is done by computing the angle between the line formed by the two eye points, and the horizontal axis. The center point is then identified. The center is computed by averaging the two eye points. The rotated face feature coordinate is then computed. The feature coordinates are transformed using an affine transformation so that the line between the two eye points is parallel to the horizontal axis. A face outline path is determined using the rotated feature coordinates. And the source image is then rotated with the result of 1. This results in an image
where the line formed by the eyes in the face is parallel to the horizontal axis.

Finally, the outline path is used to mask the rotated image. The result of this is an image where only the pixels within the bound of the outline path remain. All pixels outside the bounds are erased and made transparent. The bounds of the outline path are then used to crop the rotated and masked image. This results in an image where the face pixels span the entire width and height of the image.

In step 150, the parameters may include orientation of the face, colour space used by the source image file, the size of the image portion to be inserted and the like. Typically, the face to be inserted would be rotated to have the same orientation as the face to be replaced, it would also be scaled in size to match that of the face to be replaced and if the colour space differs from the source image to the destination image then the source image would be converted to the colour space of the destination image (such as to grey scale, increase or decrease in number of colours used, etc).

If the destination image is grayscale, the source image is converted to grayscale. An image is grayscale if the red, green, and blue components of the pixel have the same value. The conversion to grayscale is done using the standard NTSC formula: G = 0.2989*R + 0.5870*G + 0.1140*B.

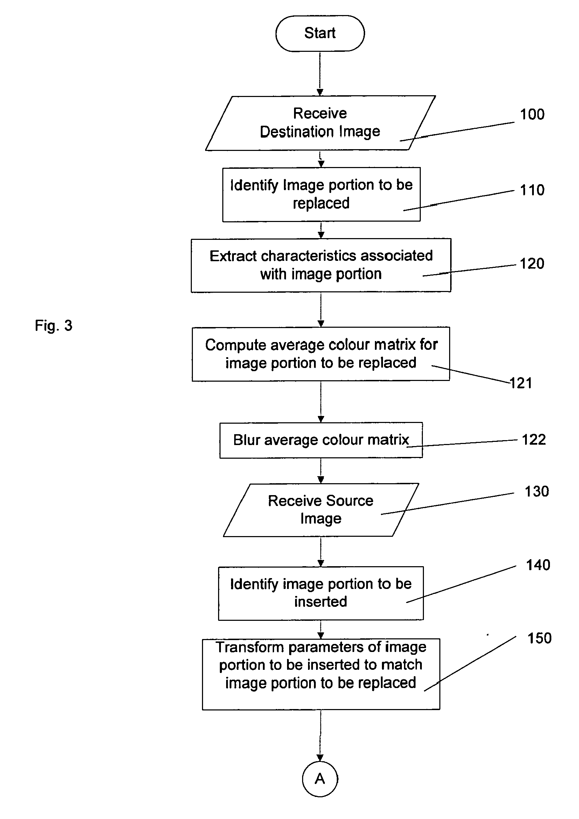

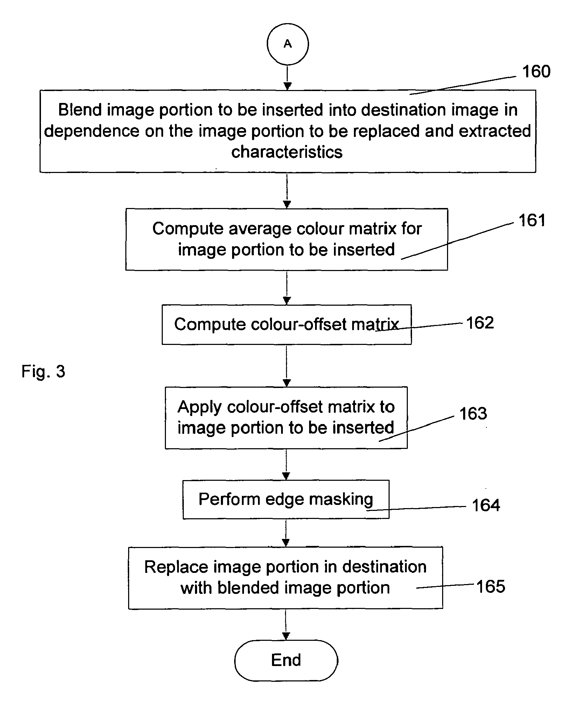

The characteristics extracted in step 120 again will depend on specific embodiments. In a preferred embodiment illustrated in the flow diagram of Figure 3, chromatic parameters may be extracted from the destination image. In the preferred embodiment, this is performed by computing an average colour matrix for the image portion to be replaced. The matrix is computed by splitting the image into columns, the number of columns being equivalent to the width of the image in pixels. The red, green and blue values for each pixel in each column are then averaged together. When computing the average, any pixels that are transparent are excluded. The result for the image is a matrix of average colour values with a number of columns equivalent to the image width and three rows containing the average colour values for red, green and blue respectively.

The average colour matrix for the destination image is then blurred. This is performed by traversing the columns of the average colour matrix and replacing the value in each column by the average value of the ten columns surrounding it. Blurring the average colour matrix is not essential for the purposes of the present invention but does it improve the blended image by removing any hard edges and shades during the blending process.

It would be appreciated that all of these steps up to step 122 can in fact be done in advance. In selected embodiments of the present invention a library of destination images can be prepared ready for blending and thereby increase processing speed of outputting the blended image when requested by a user.

Step 140 would be performed in a similar manner to step 110 to identify the coordinates of eyes and mouth. Similarly, step 160 will include a sub-step 161 computing the average colour matrix for the image portion to be inserted in the same manner as step 121. A colour-offset matrix is then computed in step 162 by subtracting the colour matrix of the source image from that of the destination image. In step 163, the colour-offset matrix is then applied to the image portion to be inserted to produce a blended image to be inserted. This is done by iterating over the columns of the source face image to be inserted. For each pixel in the column, a corresponding offset from the colour-offset matrix is applied by adding the offset values for red, green and blue to the respective red, green and blue values of the pixel.

In step 164, edge masking is preferably (again this step is not essential) performed such that the edges of the blended image are made gradually transparent. The fading transparency of edges enables a smooth overlay of the blended image in the destination image eliminating any hard edges and artefacts. Edge masking is performed using an alpha mask. The alpha mask is generated by scaling a predefined mask so that it aligns with the image to be inserted. The alpha mask is a grey scale image in which white represents fully transparent pixels, black represents fully opaque pixels and grey pixels represent a corresponding level of opacity. Edge masking is performed by applying the alpha mask to the blended image to be inserted.

Finally, in step 165 the blended, edge masked, image portion is inserted into the destination image in place of the image portion to be replaced resulting in a blended image. The position at which it is drawn is equivalent to the position of the face being removed. This results in a new image where the source face replaces the destination face. As the chromatic parameters have been extracted from the destination image and applied to the source image prior to insertion, lighting effects within the destination image are consistent even in the areas replaced by the image inserted.

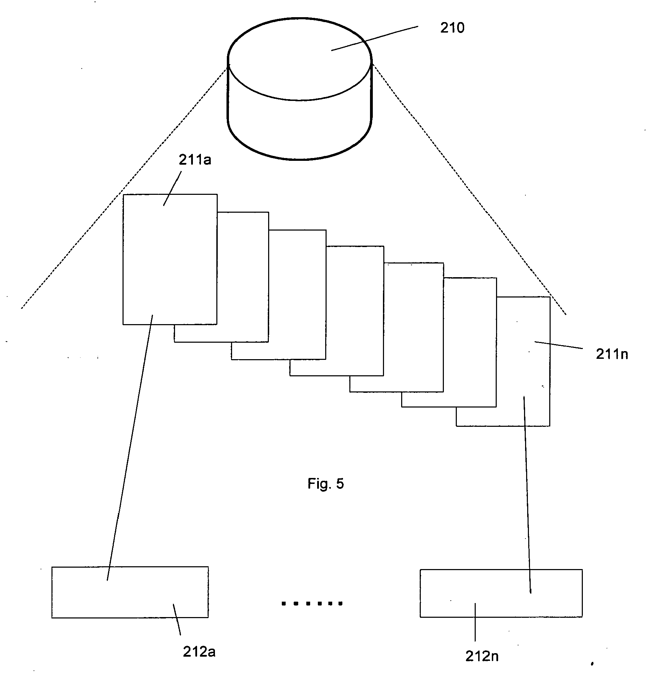

Figure 4 is a schematic diagram of a video generation system according to an embodiment of the present invention.

It will be appreciated that the system of Figure 1 and methods of Figures 2 and, optionally, Figure 3 can be scaled to be applied to image streams as well as single images. In the video generation system illustrated in Figure 4, a source image 20 is received by the Video Generation System 200 and merged with a video data stream from a data store 210 to produce a merged blended video data stream 220. Optionally, the video generation system 200 may include a user interface 205 which is arranged to receive inputs from a user for use in capturing characteristics from frames of a video data stream and writing data on the characteristics and an encoded version of the video data stream to the data store. The inputs may include selection of frames for which an image portion is replaceable, characteristic data types to capture and use etc.

The user interface 205 and processing system used to pre-process the video data stream and encode in the data store 210 could be a separate entity provided to developers, users and the like to enable them to produce compatible destination data streams in advance and upload or otherwise provide these to the system for subsequent use.

The video data stream stored in the data store 210 is essentially a series of individual destination images. The source image 20 needs only be processed once to identify the image portion to be inserted. It is then transformed as necessary to match that of the image portion to be replaced in each image of the stream. It would be appreciated that the stream can be prepared in advance (with or without input via the user interface 205) such that the image portion for each stream element in the destination stream can be pre-identified and characteristics associated with that portion extracted. In this manner, the system needs only perform steps 150 and 160 of Figure 2 (or optionally steps 150 and 160 to 165 of Figure 3) in respect of each stream entity/frame of the image steam to produce the blended video 220.

Figure 5 is a schematic diagram illustrating a possible data structure of the stream 210. The data structure includes a series of destination images 211 a-211 n in sequence. Each image has an associated data structure 212a-212n in which coordinates for the image portion to be replaced and any extracted characteristics are stored. In a preferred embodiment, the data structure may be in the format of an Apple QuickTime (RTM) video file. The QuickTime (RTM) file, when played in a QuickTime media player, would output as normal but when accessed by a video generation system in accordance an embodiment of the present invention would enable the data tracks 212a-212n to be accessed enabling the file format to be used as a pre-prepared destination image stream for use in producing a blended video.

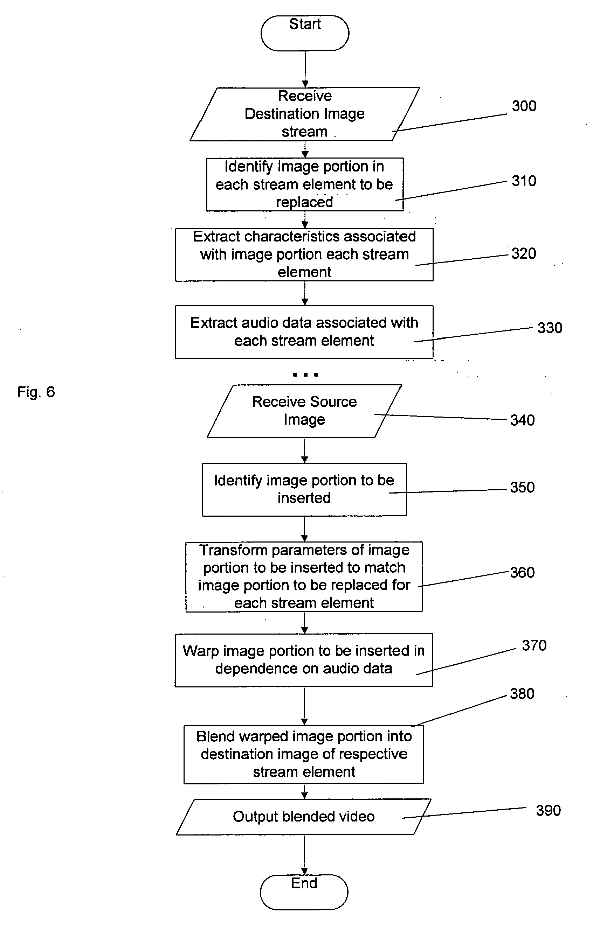

Figure 6 is a flow diagram of an image blending method according to another embodiment of the present invention.

In the method of Figure 6, it is assumed that a data stream including an image stream and an associated audio stream is available as the destination stream. However, the method is equally applicable if an audio stream is available separately to a destination image stream. In the destination image stream, one or more faces may be replaced by a face or faces from a received source image, the face of the received source image being manipulated such that the facial expression including mouth shape corresponds to detected speech in the audio data stream.

In step 300, the destination image stream is obtained. In step 310, the image portion in each stream element to be replaced is identified in the same manner as discussed previously. In step 320, characteristics associated with the image portion to be replaced are extracted. These characteristics could optionally be stored in the data structure of Figure 5. In step 330, audio data associated with the stream element is also extracted (and optionally stored in the data structure) as discussed previously, these steps can be performed in advance and subsequently stored in a data structure such as that of Figure 5.

In step 340, the source image is received. In step 350, the image portion to be inserted is identified in the same manner as previously discussed. In step 360, parameters of the image portion to be inserted are transformed to match those to be replaced for a stream element, again, in the same manner as previously discussed. In step 370, an ellipse corresponding to the mouth shape is mapped to the source image and then warped independence on the audio data. In one embodiment, the amplitude of the audio data may be used to determine the distortion of the axis of the ellipse. In step 380, the warped image portion including the remainder of the face is blended into the destination image of the respective stream element. In step 390, the blended video is output either directly to the user or broadcast via a mechanism such as IPTV or the like.

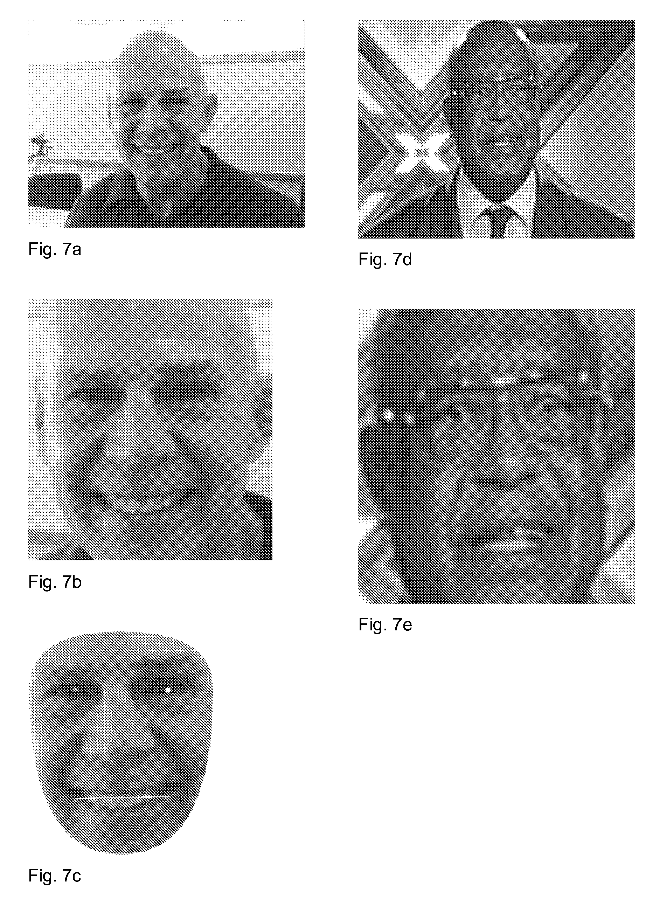

Figures 7a to 7g are images illustrating the operation of an embodiment of the present invention.

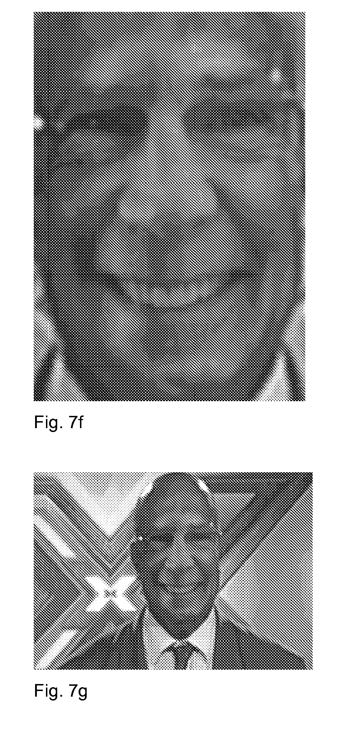

Figures 7a and 7d are the source and destination images respectively. Figures 7b and 7e respectively show the selected portions for insertion and replacement. In Figure 7c, the eyes and mouth are identified (marking is purely for illustration). Figure 7f shows the image portion for insertion inserted over the image portion to be replaced whilst Figure 7g shows the results of the completed blending process.

It will be appreciated that the various embodiments and alternatives discussed in this document are not mutually exclusive. For example, the chromatic parameters could also be applied at the same time as warping the mouth of a face to blend the image portion using more than more characteristic type.

Similarly, embodiments of the present invention are not restricted to blending of faces and could be used to blend whole bodies (for example the position and orientation of limbs could be mapped in a similar way). Additionally, other image portions such as advertisements or advertisement streams could be inserted into destination images or destination image streams. For example, the advertisement playing on a television within a particularly film could be replaced depending on the intended destination market or even intended viewer (especially in the case of IPTV where custom program content can be directly broadcast to a single or group of users). Such a mechanism avoids the need for scenes or whole videos to be re-shot, yet retains the realism of the video by transferring chromatic parameters and the like such that lighting effects are consistent throughout the video.

The system is capable of handling source images in any orientation, landscape, portrait or off-angle. The system can accurately find facial features in images starting at resolutions of 130 pixels wide.

Embodiments of the present invention can be used to build composite images of many sets of facial features, creating a composite image comprising of a volume of facial images taken at local, regional and national levels. For example, a group of friends may have their faces substituted for actors from a comedy show or the like, each friend substituting a different actor. As a further example, a composite image could be produced to represent the average face of a family group or of a fictional offspring based on the submission of two images representing the parents.

A 3D extraction and blending is also possible to enable extraction of facial features at angles greater than 20 degrees and less than 70 degrees off centre. A 3D extrusion version is possible for effective mapping of facial features onto rotated and tilted destination images.

Embodiments can be configured to store all facial characteristics associated with each analysis incident and can combine these characteristics to create a regression of progression animation based on the characteristics. This could be used to age an image of a face or rejuvenate it.

## Claims

1. An image blending system arranged to receive a source image and a destination image, the destination image including an image portion to be replaced and having characteristics associated with the identified image portion, wherein the image blending system includes a processor arranged to:
identify an image portion of the source image to be inserted into the destination image;
where necessary, transform parameters of the image portion to be inserted to match those of the image portion to be replaced; and,
blend the image portion to be inserted into the destination image in dependence on the image portion to be replaced and its associated characteristics.

2. An image blending method comprising:
(a) receiving a destination image, the destination image including an image portion to be replaced and having characteristics associated with the identified image portion;
(b) receiving a source image;
(c) identifying an image portion of the source image to be inserted into the destination image;
(d) where necessary, transforming parameters of the image portion to be inserted to match those of the image portion to be replaced; and,
(e) blending the image portion to be inserted into the destination image in dependence on the image portion to be replaced and its associated characteristics.

3. A method according to claim 2, wherein step (a) further comprises:
(a1) identifying an image portion of the destination image to be replaced; and,
(a2) extracting the characteristics associated from the image portion to be replaced from the destination image or an associated data source.

4. A method according to claim 3, further comprising:
performing steps (a1) and (a2) in advance;
recording data on the results of steps (a1) and (a2); and,
performing step (e) in dependence on the recorded data.

5. A method according to claim 2, 3 or 4, wherein the image portion to be replaced and the image portion to be inserted each include faces.

6. A method according to any of claims 2 to 5, wherein the parameters of the image portion to be replaced include at least selected ones of:
orientation of the subject of the image portion, colour space and size of the image portion.

7. A method according to any of claims 2 to 6, wherein the step (e) comprises the steps of:
(e1) computing an average colour matrix for each of the image portion to be inserted and for the image portion to be replaced;
(e2) computing a colour-offset matrix from the computed average colour matrices; and,
(e3) applying the colour-offset matrix to the image portion to be inserted to thereby transfer chromatic parameters from the image portion to be replaced.

8. A method according to claim 7, further comprising:
prior to step (e2), blurring the average colour matrix of the image portion to be replaced.

9. A method according to claim 7 or 8, further comprising:
after step (e3), performing edge masking on the image portion to be inserted using an alpha mask.

10. A method according to any of claims 2 to 9, wherein the destination image comprises one of a plurality of images forming an image stream, the method further comprising:
repeating steps (d) and (e) in respect of each of the plurality of images.
